# EUROPÄISCHE PATENTSCHRIFT

(11) **EP 1 536 903 B1**
(45) Veröffentlichungstag und Bekanntmachung des Hinweises auf die Patenterteilung: **28.02.2007**
(21) Anmeldenummer: 03794934.4
(22) Anmeldetag: 25.08.2003
(51) Int. Cl.: B23B 27/16

(54) **SCHNEIDPLATTE MIT DOPPELMULDE**
TWO-CAVITIES CUTTING MATRIX
MATRICE DE DECOUPAGE A DEUX CAVITES

(30) Priorität: 28.08.2002 DE 10239451
(43) Veröffentlichungstag der Anmeldung: 08.06.2005
(73) Patentinhaber: CeramTec AG, 73207 Plochingen (DE)
(72) Erfinder: MÜLLER, Matthias, 73230 Kirchheim/Teck (DE); ZITZLAFF, Wolfgang, 73230 Kirchheim/Teck (DE)
(74) Vertreter: Scherzberg, Andreas Hans
(86) Internationale Anmeldenummer: PCT/EP2003/009397
(87) Internationale Veröffentlichungsnummer: WO 2004/024379

(56) Entgegenhaltungen:
- EP-A- 0 901 995
- US-A- 3 156 032

## Beschreibung

Die Erfindung betrifft eine Schneidplatte zum Einspannen in ein Schneidwerkzeug zum Zerspanen von Gusswerkstoffen mit einer Schneidplattenoberseite, einer ersten Spannmulde zum Einspannen in das Schneidwerkzeug und einer Schneidkante zur spanabhebenden Bearbeitung und das zugehörige Schneidwerkzeug.

Aus der EP 0 075 177 ist eine Wendeschneidplatte aus Keramik zum Einspannen in ein Schneidwerkzeug zum Zerspanen von Gusswerkstoffen, insbesondere Gusseisen, bekannt. Die Schneidplatte enthält auf ihrer Oberseite eine Mulde bzw. Spannfläche zum Eingriff einer Spannpratze bzw. eines Klemmfingers eines Schneidwerkzeugs, wobei jede Ecke der Wendeschneidplatte eine Schneidkante aufweist.

Das Schneidwerkzeug besteht demnach aus einem Klemmhalter und einer in den Klemmhalter einzusetzenden auswechselbaren Schneidplatte. Die Schneidplatte ist dasjenige Teil, das an dem Werkstück angreift und dieses spanend bearbeitet. Die Schneidplatte muss daher aus extrem harten Material bestehen, das bei der Bearbeitung metallischer Werkstücke einen möglichst geringen Abrieb hat.

Werkstoffe, die diesen Anforderungen genügen, sind oxidkeramische Werkstoffe, wie beispielsweise Aluminium-Oxid oder Zirkon-Oxid. Solche keramischen Werkstoffe haben eine sehr hohe Härte und Druckfestigkeit, jedoch eine nur begrenzte Zugfestigkeit.

Stand der Technik ist demnach eine Schneidplatte bzw. ein Schneideinsatz, oder Wendeschneidplatte, die in einem Trägerwerkzeug zur Zerspanung von metallischen Werkstoffen eingesetzt wird. Diese kann auf verschiedenste Weise im Trägerwerkzeug befestigt werden. Eine Art der Befestigung ist mittels einer Spannklemme, die von oben die Wendeschneidplatte nach unten in den Plattensitz drückt. Hierbei ist die wichtige Kraftkomponente, die die Wendeschneidplatte in die Plattensitzecke ziehen soll, also auch zur Spannklemme hin, sehr gering. Abhilfe schafft hierbei eine Mulde oder Bohrung, in die die Spannklemme hineinragt und durch ihre Spannkraft die Kraftkomponente in die Plattensitzecke stark vergrößert. Bei einer Klemmung über eine Mulde spielt die Form der Mulde und der spannenden Elemente eine bedeutende Rolle. Eine Veränderung der Muldenform an der Wendeschneidplatte, zum Beispiel durch Schleifen oder Läppen der Oberfläche bzw. Auflageflächen, benachteiligt oder verhindert die optimale Spannung der Wendeschneidplatte über die Spannelemente.

Der Erfindung liegt die Aufgabe zugrunde, eine Schneidplatte nach dem Oberbegriff des Anspruchs 1 so zu verbessern, dass Läpp- oder Schleifbearbeitungen der Schneidplattenoberseite die Klemmeigenschaften der Schneidplatte nicht beeinflussen.

Erfindungsgemäß wird diese Aufgabe durch eine Schneidplatte gemäß Anspruch 1 gelöst.

Die Muldenform der ersten und/oder der zweiten Spannmulde kann rund, oval, eckig, vieleckig oder sternförmig sein. Es sind jedoch auch andere geometrische Formen möglich.

Vorteilhafterweise bildet die Muldenform der ersten Spannmulde eine zur Schneidplattenoberseite parallele Fläche oder ist muldenförmig ausgebildet.

Bevorzugt ist in der ersten Spannmulde eine Erhebung angeordnet.

Eine bevorzugte Ausführungsform zeichnet sich dadurch aus, dass die Muldenform der zweiten Spannmulde 12 eine zur Schneidplattenoberseite 13 parallele Fläche bildet oder eine Erhebung ist.

Dabei kann die Erhebung ringförmig ausgebildet sein.

Vorteilhafterweise ist die Schneidplatte aus Keramik hergestellt. Es sind jedoch auch Ausführungen in Hartmetall sinnvoll.

Bevorzugt ist die Schneidplatte eine Wendeschneidplatte, d. h. die beiden Seiten der Schneidplatte sind identisch ausgebildet.

Zweckmäßigerweise sind die beiden Spannmulden bei der Herstellung durch einen Pressvorgang eingebracht worden.

Als besonderes Merkmal dieser Erfindung gilt demnach die eingebrachte Doppelmulde, die zusätzlich zur Mulde, die die Spannklemme aufnimmt, noch eine zweite, die erste Mulde umgebende Mulde aufweist und z.B. beim Pressen eingebracht wird. Da beide Mulden, aufgrund ihrer Maße und Lagetoleranzen, unterhalb der Schneidplattenoberfläche bzw. Auflagefläche oder Schneidplattenoberseite liegen und bei der Herstellung mit eingepresst werden, werden sie durch notwendige Schleif- oder Läppbearbeitungen nicht verändert. Die Dickentoleranz der Schneidplatte, oder das Einhalten dieser, beeinflusst nicht die Muldenform. Dieses ermöglicht somit jederzeit eine optimale Position der Spannelemente und die Verteilung der Spannkraft mit gezielter Verteilung der Kraftkomponenten auf die Schneidplatte.

Weitere Merkmale der Erfindung ergeben sich aus den Figuren, die nachfolgend beschrieben sind. Es zeigt:
Fig. 1 eine Ansicht der erfindungsgemäßen Schneidplatte,
Fig. 2 eine erfindungsgemäße Schneidplatte eingespannt in einem Schneidwerkzeug,
Fig. 3 eine Klemmumg nach dem Stand der Technik,
Fig. 4 eine alternative Klemmung nach dem Stand der Technik,
Fig. 5 eine Klemmung mit erfindungsgemäßer Doppelmulde,
Fig. 6 einen Querschnitt durch eine erfindungsgemäße Schneidplatte,
Fig. 7-12 erfindungsgemäße Ausführungen der Schneidplatte.

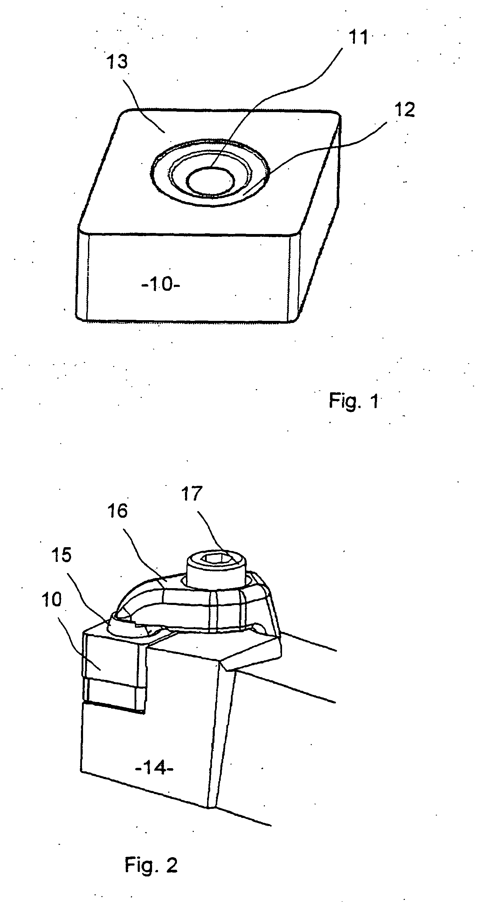

Fig. 1 zeigt eine Schneidplatte 10, insbesondere eine Wendeschneidplatte für die spanabhebende Bearbeitung von metallischen Werkstücken, im wesentlichen dadurch gekennzeichnet, dass die Schneidplatte in der Mitte eine Spannmulde 11 aufweist, wobei um diese eine weitere Spannmulde 12 platziert ist. Diese untere Spannmulde 11 soll zur Fixierung der Schneidplatte mittels Spannelementen in einer passenden Aufnahme, hier Plattensitz genannt, auf einem geeigneten Trägerwerkzeug dienen. Als besonderes Merkmal dieser Erfindung ist die obere Spannmulde 12 zu nennen, die zusätzlich Spannkräfte der Spannelemente aufnehmen kann. Beide Spannmulden 11, 12 liegen unterhalb der Schneidplattenoberseite 13, die auch als Auflagefläche bezeichnet wird.

Fig. 2 zeigt die räumliche Darstellung der beschriebenen Schneidplatte 10 im gespannten Zustand auf einem Trägerwerkzeug 14.

Eine Möglichkeit der Spannung ist hierbei über ein Druckstück 15, welches mit der Spannpratze 16 verbunden ist und an der Unterseite die Gegenform zur vorher beschriebenen Spannmulde in der Schneidplatte aufweist. Die durch Anziehen der Spannschraube 17 entstehende Spannkraft wird über die Spannpratze 16 und die Druckplatte 15 auf die Schneidplatte übertragen. Die Spannpratze 16 kann auch direkt die passende Form zur Mulde aufweisen, d.h. man kann für diesen Fall auch ohne ein Druckstück 15 auskommen. Dieses ist je nach Anwendungsfall und Muldenform zu entscheiden.

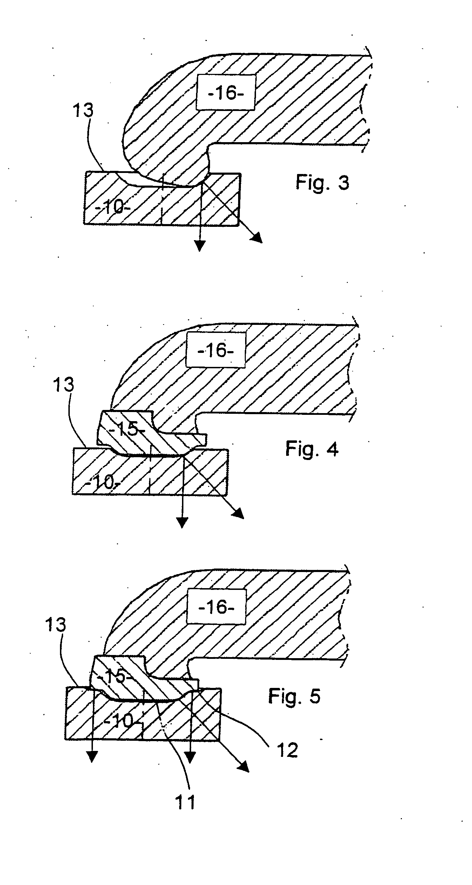

Fig.3 zeigt eine herkömmliche Klemmung, bei der die Spannpratze 16 in die Mulde der Schneidplatte 10 eingreift. Der Berührungspunkt und die Spannkraftrichtung ist mit den Pfeilen gekennzeichnet. Es besteht in der Mulde nur eine Linienberührung. Die Druckkraft konzentriert sich auf einen kleinen Bereich, der die Schneidplatte 10 beschädigen kann. Eine Bearbeitung der Schneidplattenoberseite 13 beeinflusst nicht die Spannmulde.

Fig. 4 zeigt eine herkömmliche Klemmung mit einer Spannpratze 16 und daran befestigter Druckplatte 15. Die Kraftverteilung ist so wenig optimal, wie in Fig. 3. Die Bearbeitung der Schneidplattenoberseite 13 beeinflusst auch in diesem Fall nicht die Spannmulde. Die Kontaktzone zwischen Druckplatte 15 und Schneidplatte 10 ist jedoch auch eher eine Linienberührung.

Fig. 5 zeigt eine Klemmung mit erfindungsgemäßer Doppelmulde, mit Spannpratze 16 und Druckplatte 15. Der obere Bereich der Druckplatte liegt in der oberen Mulde 12, der untere Bereich der Druckplatte 15 in der unteren Mulde 11. Das Verändern der Schneidplattenoberseite 13 verändert nicht den Abstand der Spannmulden 11, 12 untereinander. Die Kontaktzone zwischen Druckplatte 15 und Schneidplatte 10 geschieht ganzflächig über die Kontaktfläche in der oberen Spannmulde 12. Somit besteht jederzeit eine ganzflächige und optimale Kraftverteilung der Spannkräfte. Diese sind wiederum durch die Pfeile gekennzeichnet.

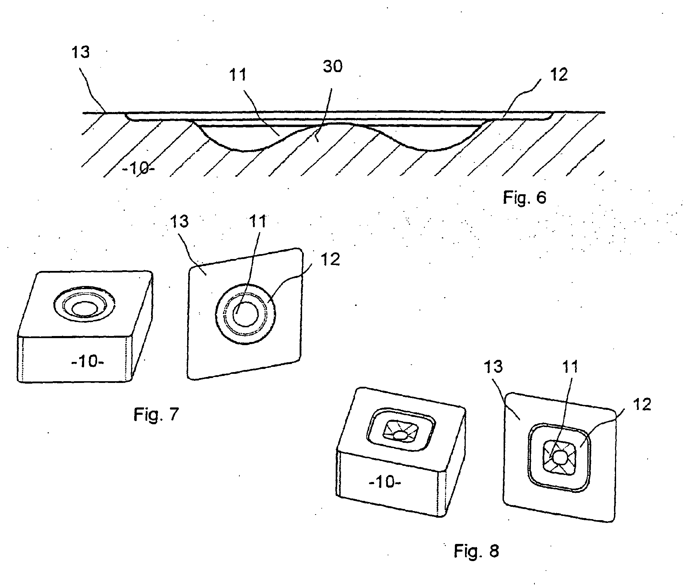

Fig. 6 zeigt einen Querschnitt durch die Mitte einer erfindungsgemäßen Schneidplatte 10. Es sind hierbei zwei Vertiefungen zu erkennen. Besondere Merkmale sind hierbei, dass die Spannmulde 12 unterhalb der Oberfläche, bzw. Auflagefläche 13 liegt, und die tiefere Mulde 11 wiederum unterhalb der Mulde 12 liegt. In der Mitte der ersten Spannmulde 11 ist eine Erhebung 30 angeordnet.

Fig. 7 bis Fig. 8 zeigen, dass die Muldenform verschiedenste Variationen aufweisen kann, wie rund, oval, eckig, vieleckig oder Sternförmig. Der Mittelteil 11 jedoch immer unterhalb des ihn umgebenen Außenteiles 12 liegt, der wiederum unter der Fläche 13 liegt.

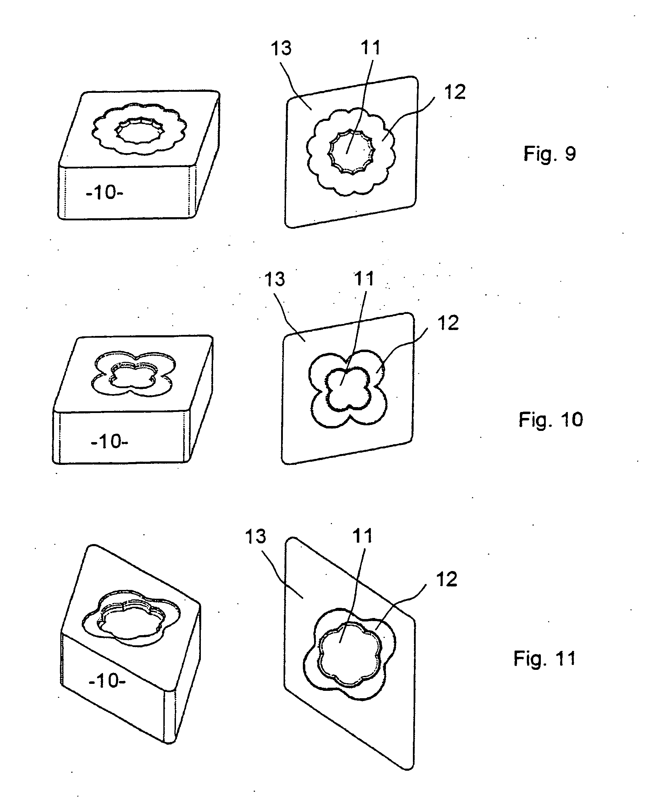

Fig. 9 bis Fig. 11 zeigen weitere mögliche Muldenformen. Das gemeinsame, besondere Merkmal ist der Mittelteil 11 der immer unterhalb des ihn umgebenen Außenteiles 12 liegt, der wiederum unter der Fläche 13 liegt.

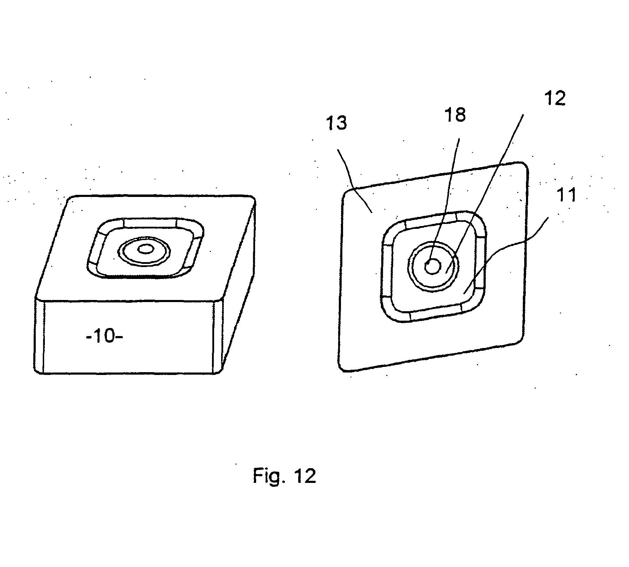

Fig 12 zeigt noch ein mögliches Muldenmerkmal. Das besondere Merkmal dieser Muldenform ist die Vertiefung, bzw. Spannmulde 11, die immer unterhalb der Fläche bzw. Schneidplattenoberseite 13 steht. In ihrer Mitte ist koaxial die zweite Spannmulde 12 angeordnet, die mit ihrem höchsten Punkt 18 unterhalb der Fläche 13 steht, jedoch oberhalb der sie umgebenden Mulde 11. Auch hier kann die Form für die Mulde 11 wieder vielfältig sein, wie rund, oval, eckig, oder sternförmig. Außerdem kann die Form der Erhebung 18 unabhängig davon auch verschiedenste Formen aufweisen. In dieser Ausführungsform ist die Erhebung 18 ringförmig ausgebildet.

## Patentansprüche

1. Schneidplatte (10) zum Einspannen in ein Schneidwerkzeug (14) zum Zerspanen von Gusswerkstoffen mit einer Schneidplattenoberseite (13), einer ersten Spannmulde (11) zum Einspannen in das Schneidwerkzeug (14) und einer Schneidkante zur spanabhebenden Bearbeitung, **dadurch gekennzeichnet, dass** koaxial zur ersten Spannmulde (11) eine zweite Spannmulde (12) angeordnet ist, wobei die erste Spannmulde (11) tiefer als die zweite Spannmulde (12) und beide tiefer als die Schneidplattenoberseite (13) angeordnet sind.

2. Schneidplatte nach Anspruch 1, **dadurch gekennzeichnet, dass** die Muldenform der ersten (11) und/oder der zweiten Spannmulde (12) rund, oval, eckig, vieleckig oder sternförmig ist.

3. Schneidplatte nach Anspruch 1 oder 2, **dadurch gekennzeichnet, dass** die Muldenform der ersten Spannmulde (11) eine zur Schneidplattenoberseite (13) parallele Fläche bildet oder muldenförmig ausgebildet ist.

4. Schneidplatte nach Anspruch 3, **dadurch gekennzeichnet, dass** in der ersten Spannmulde (11) eine Erhebung (30) angeordnet ist.

5. Schneidplatte nach einem der Ansprüche 1 bis 4, **dadurch gekennzeichnet, dass** die Muldenform der zweiten Spannmulde (12) eine zur Schneidplattenoberseite (13) parallele Fläche bildet oder eine Erhebung (18) ist.

6. Schneidplatte nach Anspruche 5, **dadurch gekennzeichnet, dass** die Erhebung (18) ringförmig ausgebildet ist.

7. Schneidplatte nach einem der Ansprüche 1 bis 6, **dadurch gekennzeichnet, dass** die Schneidplatte aus Keramik hergestellt ist.

8. Schneidplatte nach einem der Ansprüche 1 bis 7, **dadurch gekennzeichnet, dass** die Schneidplatte eine Wendeschneidplatte ist.

9. Schneidplatte nach einem der Ansprüche 1 bis 8, **dadurch gekennzeichnet, dass** die beiden Spannmulden (11,12) bei der Herstellung durch einen Pressvorgang eingebracht worden sind.

10. Schneidwerkzeug mit einer Schneidplatte nach einem der Ansprüche 1 bis 9.

## Claims

1. Cutting plate (10) for clamping in a cutting tool (14) for machining cast materials, having a cutting-plate upper side (13), a first clamping trough (11) for the clamping in the cutting tool (14), and a cutting edge for metal-removing processing, **characterised in that** a second clamping trough (12) is arranged coaxially with respect to the first clamping trough (11), with the first clamping trough (11) being arranged so that it is deeper than the second clamping trough (12) and both being arranged so that they are deeper than the cutting-plate upper side (13).

2. Cutting plate according to claim 1, **characterised in that** the trough shape of the first (11) and/or the second clamping trough (12) is round, oval, angular, polygonal or star-shaped.

3. Cutting plate according to claim 1 or 2, **characterised in that** the trough shape of the first clamping trough (11) forms a surface that is parallel to the cutting-plate upper side (13) or is formed so that it is trough-shaped.

4. Cutting plate according to claim 3, **characterised in that** an elevation (30) is arranged in the first clamping trough (11).

5. Cutting plate according to one of claims 1 to 4, **characterised in that** the trough shape of the second clamping trough (12) forms a surface that is parallel to the cutting-plate upper side (13) or is an elevation (18).

6. Cutting plate according to claim 5, **characterised in that** the elevation (18) is formed so that it is annular.

7. Cutting plate according to one of claims 1 to 6, **characterised in that** the cutting plate is made of ceramic material.

8. Cutting plate according to one of claims 1 to 7, **characterised in that** the cutting plate is an indexable cutting plate.

9. Cutting plate according to one of claims 1 to 8, **characterised in that** the two clamping troughs (11, 12) have been introduced during production by means of a pressing process.

10. Cutting tool with a cutting plate according to one of claims 1 to 9.

## Revendications

1. Plaquette de coupe (10) à monter par serrage dans un outil de coupe (14) pour usiner par enlèvement des alliages de fonderie, comprenant un dessus de plaquette de coupe (13), une première cuvette de serrage (11) pour le serrage dans l'outil de coupe (14) et une arête de coupe pour l'usinage par enlèvement de copeaux, **caractérisée en ce que** coaxialement à la première cuvette de serrage (11) est disposée une seconde cuvette de serrage (12), la première cuvette de serrage (11) étant disposée plus bas que la seconde cuvette de serrage (12), et toutes deux étant disposées plus bas que le dessus de plaquette de coupe (13).

2. Plaquette de coupe selon la revendication 1, **caractérisée en ce que** la forme de cuvette de la première (11) et/ou de la seconde cuvette de serrage (12) est ronde, ovale, angulaire, polygonale ou en étoile.

3. Plaquette de coupe selon la revendication 1 ou 2, **caractérisée en ce que** la forme de cuvette de la première cuvette de serrage (11) engendre une surface parallèle au dessus de plaquette de coupe (13) ou est conformée en cuvette.

4. Plaquette de coupe selon la revendication 3, **caractérisée en ce qu'**un relief (30) est prévu dans la première cuvette de serrage (11).

5. Plaquette de coupe selon une des revendications 1 à 4, **caractérisée en ce que** la forme de cuvette de la seconde cuvette de serrage (12) engendre une surface parallèle au dessus de plaquette de coupe (13) ou crée un relief (18).

6. Plaquette de coupe selon la revendication 5, **caractérisée en ce que** le relief (18) est de conformation annulaire.

7. Plaquette de coupe selon une des revendications 1 à 6, **caractérisée en ce que** la plaquette de coupe est réalisée en céramique.

8. Plaquette de coupe selon une des revendications 1 à 7, **caractérisée en ce que** la plaquette de coupe est une plaquette de coupe amovible.

9. Plaquette de coupe selon une des revendications 1 à 8, **caractérisée en ce que**, lors de la fabrication, les deux cuvettes de serrage (11, 12) sont réalisées par une opération de pressage.

10. Outil de coupe avec une plaquette de coupe selon une des revendications 1 à 9.
